# EUROPÄISCHE PATENTANMELDUNG

(11) **EP 4 571 202 A1**
(43) Veröffentlichungstag der Anmeldung: **18.06.2025**
(21) Anmeldenummer: 24214157.0
(22) Anmeldetag: 20.11.2024
(51) Int. Cl.: F24D 19/10, F24H 15/164, F24D 11/02, F24H 15/215, F24H 15/223, F24H 15/254, F24H 15/277, F24H 15/281, F24H 15/37, F24H 15/375, F24H 15/429, F25B 30/02, G05D 23/19

(54) **VERFAHREN ZUM BETREIBEN EINER WÄRMEPUMPE UND WÄRMEPUMPE**

(30) Priorität: 14.12.2023 DE 102023135224
(71) Anmelder: Stiebel Eltron GmbH & Co. KG, 37603 Holzminden (DE)
(72) Erfinder: Wurtz, Albrecht, 65227 Karlstad (SE); Andersson, Rasmus, 67192 Arvika (SE); Gurnett, Björn, 67170 Edane (SE); Olm, Jan, 66731 Forshaga (SE); Alfredsson, Sandra, 67198 Gunnarskog (SE); Bengtsson, David, 66333 Skoghall (SE); Stener, Robert, 65639 Karlstad (SE); Lykken, Petter, 67192 Arvika (SE)

(57) **Zusammenfassung**

Die Erfindung betrifft ein Verfahren (100) zum Betreiben einer Wärmepumpe (10) zum Decken eines Wärmeenergiebedarfs wenigstens einer mittels der Wärmepumpe (10) zu versorgenden Wärmesenke (40, 42), insbesondere eines Heizungssystems (40) eines Gebäudes, wobei die Wärmepumpe (10) einen Kältekreislauf zum Erzeugen der Wärmeenergie und eine Steuerung (20) zum Ansteuern des Kältekreislaufs aufweist, umfassend die Schritte:
- Bestimmen (102) des Wärmeenergiebedarfs an der Wärmesenke (40, 42) und eines damit verknüpften, durch die Wärmepumpe (10) zu erreichenden Temperatursollwertes (Ts) mittels der Steuerung (20) in Abhängigkeit von einer aktuellen Umgebungsbedingung;
- Ermitteln einer Verfügbarkeit und/oder eines Preises des zum Betrieb der Wärmepumpe (10) benötigen Stroms durch die Steuerung (20), und
- Anpassen des Temperatursollwertes (Ts) für die zu versorgende Wärmesenke in Abhängigkeit von der Verfügbarkeit des Stroms und/oder dem Strompreis und unter Berücksichtigung eines Vermeidens eines unnötigen Zuschaltens einer Zusatzheizung an der Wärmepumpe.

## Beschreibung

Die vorliegende Erfindung bezieht sich auf ein Verfahren zum Betreiben einer Wärmepumpe zum Decken eines Wärmeenergiebedarfs wenigstens einer mittels der Wärmepumpe zu versorgenden Wärmesenke, insbesondere eines Heizungssystems eines Gebäudes. Des Weiteren betrifft die Erfindung eine Wärmepumpe mit wenigstens einem Kältekreislauf, wobei der Kältekreislauf zumindest einen Kompressor, einen Verflüssiger, ein Expansionsventil und einen Verdampfer aufweist, und einer Steuerung, welche zumindest zum Ansteuern des Kältekreislaufs eingerichtet ist.

Wärmepumpen sind im Stand der Technik hinreichend bekannt und werden zunehmend eingesetzt, um Gebäude mit der benötigten Wärmeenergie (Warmwasser und Heizung) zu versorgen. Wärmepumpen sind Vorrichtungen, die Arbeit nutzen, um Wärme von einem kühleren Raum zu einem wärmeren Raum mithilfe eines Kältekreislaufs zu übertragen. Wärmepumpen sind energieeffizienter als übliche Heizsysteme, welche zur Erzeugung von Wärme Primärenergieträger, wie Erdgas oder Erdöl, aber auch Strom nutzen.

Zum Betreiben der Wärmepumpen wird üblicherweise Strom verwendet, dessen Preis in vielen europäischen Länder im Tagesverlauf starken Schwankungen unterworfen ist. Die Preise für den Strom werden insbesondere im Voraus für jede Stunde eines kommenden Zeitraums festgelegt. Zudem werden von einigen Stromversorgern Belohnungen angeboten, wenn ein Abnehmer seine Stromlast kurzfristig anpassen kann. An bekannten, stromgespeisten Heizungsanlagen wird die oben genannte Problematik bereits teilweise berücksichtigt, indem die Heizungsanlage in Abhängigkeit vom aktuellen Strompreis das Signal des Außentemperaturfühlers manipuliert. Dadurch wird ein erhöhter Wärmebedarf simuliert, sodass bei einem niedrigen Strompreis das Heizungssystem mehr Wärme erzeugt als benötigt wird. Die überschüssige Wärmeenergie wird dann in der Wärmesenke selbst gespeichert.

Bei Wärmepumpen hätte das Manipulieren des Außentemperaturfühlers unter Umständen zur Folge, dass das System zu der Einschätzung gelangt, dass der simulierte erhöhte Wärmebedarf durch die mittels des Kältekreislaufs erzeugte Wärme nicht gedeckt werden kann, sodass eine oft interne elektrische Zusatzheizung, die nur als Reserve gedacht ist, zugeschaltet werden muss, obwohl das Zuschalten grundsätzlich nicht nötig wäre. Um an einer eine Wärmesenke mit Wärme versorgenden Wärmepumpe auf entsprechende Preisschwankungen am Strommarkt reagieren und auf effiziente Weise die Wärmeversorgung der mit der Wärmepumpe gekoppelten Wärmesenke vornehmen zu können, bedarf es eines angepassten Regelungsbedarfs an der Wärmepumpe.

Der Erfindung lag daher die Aufgabe zugrunde, ein Verfahren zum Betreiben einer Wärmepumpe sowie eine Wärmepumpe aufzuzeigen, mithilfe derer die grundsätzlich effiziente Wärmeversorgung der Wärmesenke noch verbessert ist.

Die Erfindung löst die ihr zugrundeliegende Aufgabe bei einem Verfahren zum Betreiben einer Wärmepumpe zum Decken eines Wärmeenergiebedarfs wenigstens einer mittels der Wärmepumpe zu versorgenden Wärmesenke, insbesondere eines Heizungssystems eines Gebäudes, wobei die Wärmepumpe einen Kältekreislauf zum Erzeugen der Wärmeenergie und eine Steuerung zum Ansteuern des Kältekreislaufs aufweist, mit den Merkmalen von Anspruch 1. Insbesondere umfasst das Verfahren die Schritte: Bestimmen des Wärmeenergiebedarfs an der Wärmesenke und eines damit verknüpften, durch die Wärmepumpe zu erreichenden Temperatursollwertes mittels der Steuerung in Abhängigkeit von einer aktuellen Umgebungsbedingung; Ermitteln einer Verfügbarkeit und/oder eines Preises des zum Betreiben der Wärmepumpe benötigen Stroms durch die Steuerung, und Anpassen des Temperatursollwertes für die zu versorgende Wärmesenke in Abhängigkeit von der Verfügbarkeit des Stroms und/oder dem Strompreis und unter Berücksichtigung eines Vermeidens eines unnötigen Zuschaltens einer Zusatzheizung an der Wärmepumpe.

Die Erfindung verfolgt vorliegend den Ansatz, statt den Außentemperatursensor zu manipulieren, nunmehr insbesondere mittels der Steuerung den Temperatursollwert und darüber die Wärmemenge anzupassen, die an die durch die Wärmepumpe zu versorgende Wärmesenke geleitet wird. Das Anpassen des Temperatursollwertes erfolgt dabei unter Berücksichtigung der Verfügbarkeit des Stroms und des damit häufig verknüpften Strompreises, wobei durch die Steuerung gleichzeitig überwacht wird, ob die Anpassung des Temperatursollwertes ein unnötiges Zuschalten der Zusatzheizung an der Wärmepumpe zur Folge hätte. Demnach erfolgt das Anpassen des Temperatursollwertes in Abhängigkeit von zwei Entscheidungskriterien, wobei das zweite Entscheidungskriterium, betreffend das Zuschalten der Zusatzheizung, das erste Entscheidungskriterium, betreffend die Verfügbarkeit des Stroms bzw. die Höhe des Strompreises, überstimmen bzw. übersteuern kann. Mit Anpassen des Temperatursollwertes ist insbesondere das Erhöhen wie auch das Verringern des Temperatursollwertes gemeint. Erfindungsgemäß wird somit nicht nur bei einem vergleichsweise niedrigen Strompreis der Temperatursollwert nach oben angepasst, sondern bei einem vergleichsweise hohen Strompreis der Temperatursollwert auch nach unten angepasst werden. Zumindest zeitweise wird damit eine Minderversorgung der Wärmesenke mit Wärmeenergie bewusst in Kauf genommen. Das Bestimmen des Wärmeenergiebedarfs an der Wärmesenke erfolgt bevorzugt in Abhängigkeit von einer aktuell gemessenen Außentemperatur. Vorzugsweise wird die Verfügbarkeit des Stroms bzw. die Höhe des Strompreises in Form eines zuvor von der Steuerung selbst ermittelten Preisindexes A von der Steuerung der Wärmepumpe berücksichtigt, der neben dem Strompreis auch durch einen Anwender einstellbare Parameter (Effizienz oder Komfort) definiert wird.

Gemäß einer bevorzugten Weiterbildung des Verfahrens ist vorgesehen, dass mit Anpassen des Temperatursollwertes eine Bedarfsbestimmung auf Basis des angepassten Temperatursollwertes vorgenommen, und auf Grundlage der Bedarfsbestimmung das Anpassen des Temperatursollwertes gestoppt werden kann. Damit ist auf einfache Weise bewirkt, dass die Zusatzheizung, wenn sie denn nicht tatsächlich als echte Zusatzheizung benötigt wird, nicht unnötigerweise zugeschaltet wird. Somit ist der effiziente Betrieb auch mit Anpassen des Temperatursollwertes über eine maximal große Betriebsdauer möglich. Vorzugsweise wird die Bedarfsbestimmung auf Basis des angepassten Temperatursollwertes mittels der Steuerung der Wärmepumpe durchgeführt, wobei insbesondere eine kontinuierliche bzw. eine sich in vorbestimmten Zeitintervallen wiederholende Überwachung zur Bedarfsbestimmung vorgenommen wird. Vorzugsweise ist die Steuerung, um dem unnötigen Zuschalten der Zusatzheizung entgegenzuwirken, dazu eingerichtet, das Anpassen des Temperatursollwertes zu stoppen bzw. ein Zurückstellen des Temperatursollwertes in Richtung eines Ausgangswertes zu veranlassen.

In einer Weiterbildung der Erfindung ist vorgesehen, dass das Anpassen des Temperatursollwertes, insbesondere ein Erhöhen oder Verringern des Temperatursollwertes, stufen- oder schrittweise und ausgehend von einem die Grundversorgung der Wärmesenke mit Wärmeenergie definierenden neutralen Temperatursollwert erfolgt. Insbesondere erfolgt mittels der Steuerung ein allmähliches stufenweises Anpassen des Temperatursollwertes, sodass in Verbindung mit einer bevorzugt gleichzeitig durchgeführten Bedarfsbestimmung einem möglichen Zuschalten der Zusatzheizung einfach und schnell gegengesteuert werden kann. Nach Ablauf einer Zeitspanne mit einem vergleichsweise hohen Strompreis, in der der Temperatursollwert an der Wärmepumpe unter den die Normalversorgung der Wärmesenke sicherstellenden neutralen Temperatursollwert abgesenkt wurde und der aktuelle Temperatursollwert wieder allmählich, also schrittweise und nicht sprunghaft, und damit langsam in Richtung des neutralen Temperatursollwertes angehoben werden soll, wird bevorzugt einem sofortigen übermäßigen Erhöhen des Temperatursollwertes entgegengewirkt, um das unnötige Zuschalten der Zusatzheizung bestenfalls auszuschließen.

Vorzugsweise wird in einer möglichen Ausführungsform des Verfahrens im Falle eines notwendigen Zuschaltens der Zusatzheizung bei einem neutralen Temperatursollwert eine von der Zusatzheizung in Richtung der Wärmesenke abgegebene Leistung in Abhängigkeit von der Verfügbarkeit des Stroms und/oder des Strompreises gesteuert. Mit Zuschalten der Zusatzheizung soll durch die Steuerung die Leistungsabgabe der Zusatzheizung und damit deren Stromverbrauch bevorzugt angepasst werden können. Dadurch wird das effiziente Betreiben einer Wärmepumpe auch im Zustand eines erhöhten Wärmeenergiebedarfs weiter verbessert. Zu Tageszeiten, an denen die Außentemperatur unter dem Bivalenzpunkt liegt und der Strom günstig ist, wird die Zusatzheizung mit einer höheren Leistung angefahren als zu Tageszeiten, an denen bei gleicher Temperatur der Strom "teuer" ist Da die Strompreise bereits im Voraus festgelegt sind, ist die Steuerung dazu eingerichtet, die Leistungsabgabe der Zusatzheizung, welche als interne oder externe Zusatzheizung ausgebildet sein kann, zumindest zu minimieren bzw. so lange zu verzögern, bis sich der Strompreis wieder bis auf ein Niveau verringert hat, bei dem die Zusatzheizung automatisiert zumindest mit minimierter Leistungsabgabe zugeschaltet wird. Sofern die Verfügbarkeit des Stroms bei einem neutralen Wert oder darunter liegt, besteht auch während eines notwendigen Zuschaltens der Zusatzheizung die Möglichkeit des Anpassens des Temperatursollwertes für den Wärmepumpenbetrieb.

Gemäß einer bevorzugten Weiterbildung umfasst das Verfahren den Schritt: zeitliches Verschieben einer Temperatursollwert-Anpassung für das Decken des Wärmeenergiebedarfs in Richtung eines Endabschnitts einer Zeitspanne mit einer hohen Verfügbarkeit an Strom und/oder einem relativ niedrigen Strompreis. Mit der erfindungsgemäßen Ansteuerung ist das effiziente Betreiben der Wärmepumpe weiter verbessert. Eine beabsichtigte Überversorgung der Wärmesenke mit Wärmeenergie wird bevorzugt so weit nach hinten verschoben, dass eine sich anschließende Zeitspanne mit einem hohen Strompreis bestenfalls vollständig überbrückt werden kann. Eine derartige Verschiebung in der Temperatursollwert-Anpassung kann für jede der mit der Wärmepumpe gekoppelten Wärmesenken umgesetzt werden. Die Versorgung sowohl eines mit der Wärmepumpe gekoppelten Heizungssystems als auch eines dem Heizungssystem vorgeschalteten Pufferspeichers mit Wärme kann derart umgesetzt werden. Ein zeitliches Verschieben erfolgt bevorzugt nur dann, wenn die Zeitspanne, in der eine hohe Verfügbarkeit bzw. ein niedriger Strompreis gegeben ist, um ein Vielfaches größer ist als die Periode, die für das Aufheizen des Heizungssystems bzw. des Pufferspeichers oder auch eines von der Wärmepumpe versorgten Brauchwasserspeichers benötigt wird. Vorzugsweise erfolgt das zeitliche Verschieben nur, wenn die vorgegebene Zeitspanne vorzugsweise um das Zweifache größer ist als die benötigte Zeitspanne für das Aufheizen einer jeweiligen Wärmesenke.

Vorzugsweise wird das zeitliche Verschieben der Temperatursollwert-Anpassung in Abhängigkeit von einer Abschätzung der thermischen Masse der mit Wärmeenergie zu versorgenden Wärmesenke vorgenommen. Je geringer die thermische Masse der

Eine Weiterbildung der Erfindung sieht vorzugsweise den Schritt vor: Anpassen des Temperatursollwertes auf den neutralen Temperatursollwert vor Erreichen eines Endes einer/der Zeitspanne mit der hohen Verfügbarkeit des Stroms und/oder dem relativ niedrigen Strompreis. Damit ist auf vorteilhafte Weise ein Auslösen des Ansteuerns des Kältekreislaufs an der Wärmepumpe vermieden, der nicht vor dem Ende der Zeitspanne mit einer hohen Verfügbarkeit an Strom bzw. einem niedrigen Strompreis unterbrochen werden kann. Unnötig hohen, unbeabsichtigterweise entstehenden Kosten wird mittels des vorliegenden Verfahrensschritts auf vorteilhafte Weise entgegengewirkt. In der Steuerung der Wärmepumpe sind beispielsweise Schaltzeiten für das Ansteuern des Kältekreislaufs an der Wärmepumpe hinterlegt, sodass mittels der Steuerung vorzugsweise bestimmt werden kann, wie lang die letzten Einschaltzustände des Kältekreislaufs waren. Mit Ablauf einer durch die Schaltzeiten definierten Restzeit wird vor Ende der Zeitspanne der zuvor eingestellte Temperatursollwert unmittelbar auf den neuen Temperatursollwert bzw. schrittweise auf den neutralen Temperatursollwert zurückgesetzt.

Gemäß einer bevorzugten Ausgestaltung des Verfahrens umfasst dieses den Schritt: Steuern der Wärmepumpenleistung, im Falle, dass die Wärmeenergie in einem Pufferspeicher größer ist als die Wärmemenge, die an die Wärmesenke abgegeben wird, und eine dem Pufferspeicher nachgeschaltete Verteilereinheit zumindest teilweise geschlossen ist, unter Berücksichtigung des Umstands, dass die thermische Masse an der Wärmesenke kleiner ist als im Vergleich zu einer normalen Absenkung bei geöffneter Verteilereinheit. Mit dem Ansteuern einer dem Pufferspeicher nachgeschalteten Verteilereinheit kann insbesondere im Falle, dass sich die Wärmepumpe in einem Regelzustand einer Absenkung befindet, was üblicherweise nach einer zuvor erfolgten Überhitzungsphase der durch die Wärmepumpe versorgten Wärmesenke vorliegt, die Wärmepumpenleistung auf einfache Weise nachgesteuert werden. Eine derartige Ansteuerung bewirkt eine Drehzahlerhöhung eines im Kältekreislauf angeordneten Kompressors, wodurch die Wärmepumpe in einen modulierten Betrieb übergeht. Das Fahren des Kompressors der Wärmepumpe im modulierten Betrieb, erfolgt sonst üblicherweise nur, wenn der eingestellte Temperatursollwert über dem durch die aktuellen Umgebungsbedingungen bedingten neutralen Temperatursollwert liegt.

In einer bevorzugten Weiterbildung ist vorgesehen, dass mit Auftreten eines Temperaturabfalls an der Wärmesenke nach dem Abschalten des Kältekreislaufs eine Geschwindigkeit für den Temperaturabfall gemessen wird. Vorzugsweise erfolgt das Messen der Geschwindigkeit für den Temperaturabfall in Perioden, in denen der Wärmeenergiebedarf der Wärmesenke geringer ist als die vom Kältekreislauf erzeugte Wärmemenge, die bei der niedrigsten zulässigen Verdichterdrehzahl erzeugt wird. Damit kann bevorzugt einem verfrühten Wiederanlaufen des Kältekreislaufs entgegengewirkt und das Ansteuern des Kältekreislaufs möglichst lange hinausgezögert werden. Insbesondere lässt sich damit das notwendige Ansteuern des Kältekreislaufs gezielt in eine Zeitspanne mit einem vergleichsweise geringen Strompreis verschieben und ein erneutes Wiederanlaufen individuell und effizient in eine nachfolgende Zeitspanne mit einem niedrigen Strompreis gelegt werden. In einer möglichen Ausgestaltung wird die Geschwindigkeit für den Temperaturabfall innerhalb eines Heizungssystems insbesondere durch Erfassen der Temperatur im Systemrücklauf erfasst. Zum Erfassen des Temperaturabfalls innerhalb eines Pufferspeichers ist bevorzugt ein Pufferspeichersensor vorgesehen.

In einer optionalen bzw. alternativen Ausgestaltung wird mit Auftreten eines Temperaturabfalls im Gebäude nach dem Abschalten des Kältekreislaufs durch Erfassen der Temperatur an einem Raumsensor eine Geschwindigkeit für den Temperaturabfall im System gemessen. Vorzugsweise wird das Erfassen des Temperaturabfalls wiederum in einer zeitlichen Periode durchgeführt, in der der Wärmeenergiebedarf der Wärmesenke geringer ist als die Wärmemenge, die bei der niedrigsten zulässigen Verdichterdrehzahl erzeugt wird. Mithilfe einer solchen Überwachung können in einem Verfahren zum Betreiben einer Wärmepumpe sich für die betriebssichere Langzeitfunktion der Wärmepumpe sich nachteilig auswirkende An- und Abschaltzeiten des Kältekreislaufs auf ein Minimum reduziert werden.

Der Raumsensor, der Temperatursensor im Systemrücklauf wie auch im Pufferspeicher sind über entsprechende signalleitende Verbindungen mit der Steuerung der Wärmepumpe gekoppelt.

In einer bevorzugten Ausführung umfasst das erfindungsgemäße Verfahren den Schritt: Anpassen des Temperatursollwertes in Richtung des neutralen Temperatursollwertes, im Falle des Vorliegens eines Temperatursollwertes, der für einen längeren Zeitraum unterhalb des neutralen Temperatursollwertes angepasst war, und des Erfassens einer Temperatur mittels eines Raumsensors, wenn diese unterhalb einer Komforttemperatur liegt. Mithilfe des vorbeschriebenen Steuerungsschrittes wird in Abhängigkeit von den angegebenen Referenzbedingungen vorzugsweise einer Unterkühlung an der durch die Wärmepumpe versorgten Wärmesenke entgegengewirkt und ein sich in diesem Zusammenhang einstellender erhöhter Energiebedarf vermieden. Insbesondere in Zeitspannen mit einer niedrigen Verfügbarkeit an Strom bzw. einem hohen Strompreis kann zum Erzielen einer entsprechenden Komforttemperatur innerhalb eines Gebäudes zu dem bei einem neutralen Temperatursollwert betriebenen Kältekreislauf gegebenenfalls dann auch noch die Zusatzheizung der Wärmepumpe zum Abfangen einer sich möglicherweise einstellenden Unterkühlung an der Wärmesenke zugeschaltet werden.

Die Erfindung betrifft in einem weiteren Aspekt eine Wärmepumpe mit wenigstens einem Kältekreislauf, wobei der Kältekreislauf zumindest einen Kompressor, einen Verflüssiger, ein Expansionsventil und einen Verdampfer aufweist, und einer Steuerung, welche zumindest zum Ansteuern des Kältekreislaufs eingerichtet ist. Die Wärmepumpe löst die auch dem Verfahren zugrundeliegende Aufgabe, indem die Steuerung zum Ausführen eines Verfahrens zum Betreiben einer Wärmepumpe zum Decken des Wärmeenergiebedarfs einer Wärmesenke gemäß einer der vorstehend beschriebenen bevorzugten Ausführungsformen eingerichtet ist. Insbesondere ist die Steuerung der Wärmepumpe dazu eingerichtet, den Wärmeenergiebedarf an der Wärmesenke zu bestimmen und auf Basis dessen einen damit verknüpften durch die Wärmepumpe zu erreichenden Temperatursollwert zu ermitteln, was üblicherweise in Abhängigkeit von den aktuellen Umgebungsbedingungen, wie beispielsweise der Außentemperatur, erfolgt. Zudem ist die Steuerung dazu eingerichtet, die Verfügbarkeit und/oder den Preis des für den Betrieb der Wärmepumpe benötigten Stroms zu ermitteln, insbesondere über einen vorbestimmten Zeitraum im Voraus zu ermitteln, sodass eine effiziente Steuerung der Wärmepumpe auf Grundlage des sich in vorgegebenen Zeitabständen ändernden Strompreises möglich ist. Zudem ist die Steuerung dazu eingerichtet, den Temperatursollwert für die zu versorgende Wärmesenke in Abhängigkeit von eben der Verfügbarkeit des Stroms bzw. dem Strompreis anzupassen, wobei das Anpassen des Temperatursollwertes dahingehend eingeschränkt wird, dass das Zuschalten einer Zusatzheizung an der Wärmepumpe vermieden wird. Um das zu bewirken, wird der Temperatursollwert mittels der Steuerung erhöht wie auch verringert.

Die zum erfindungsgemäßen Verfahren beschriebenen, bevorzugten Ausführungsformen bzw. Weiterbildungen sind zugleich auch bevorzugte Ausführungsformen der erfindungsgemäßen Wärmepumpe. Vorzugsweise ist die Steuerung der Wärmepumpe dazu eingerichtet, mit Anpassen des Temperatursollwertes eine Bedarfsbestimmung auf Basis des angepassten Temperatursollwertes vorzunehmen und auf Grundlage der Bedarfsbestimmung das Anpassen des Temperatursollwertes zu stoppen bzw. den Temperatursollwert entgegen der zuvor vorgenommenen Anpassung in die entgegengesetzte Richtung zurückzustellen. Zudem nimmt die Steuerung in vorliegenden Abständen eine Bedarfsbestimmung für die Wärmesenke vor, auf Basis derer ein neutraler Temperatursollwert definiert wird, der als Grundlage für das Anpassen des Temperatursollwertes nach oben wie auch nach unten dient.

Weitere Vorteile und Ausführungsbeispiele werden unter Bezugnahme auf die beigefügten Figuren näher beschrieben. Hierbei zeigen:
- Fig. 1:: eine schematische Darstellung einer erfindungsgemäßen Wärmepumpe, welche mit zumindest einer Wärmesenke verbunden ist;
- Fig. 2:: eine schematische Darstellung eines erfindungsgemäßen Verfahrens gemäß einer bevorzugten Ausführungsform;
- Fig. 3:: ein Diagramm, das den Verlauf eines Preisindexes als Ausgangswert für das Ansteuern einer erfindungsgemäßen Wärmepumpe zeigt;
- Fig. 4:: ein Diagramm, das den Verlauf von Start- und Stopp-Temperaturen für die Brauchwassererzeugung mittels der Wärmepumpe in Abhängigkeit von dem sich verändern Preisindexes zeigt, und
- Fig. 5:: ein Diagramm, das den Verlauf der Versorgungstemperatur der Wärmepumpe in Abhängigkeit vom Preisindex und einem an der Wärmepumpe einstellbaren Temperatursollwert zeigt.

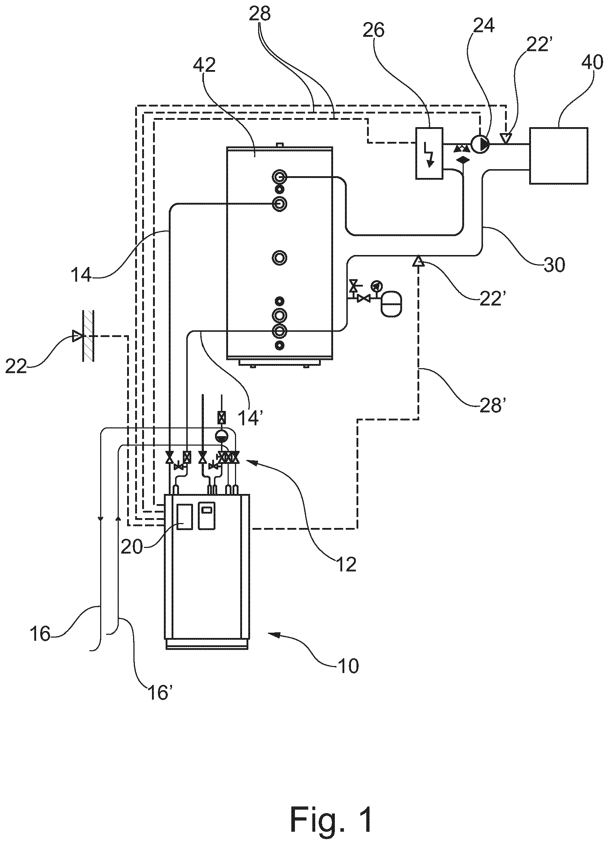

Fig. 1 zeigt eine Wärmepumpe 10 zum Decken eines Wärmeenergiebedarfs wenigstens einer mittels der Wärmepumpe 10 zu versorgenden Wärmesenke 40, insbesondere eines Heizungssystems in einem nicht näher abgebildeten Gebäude.

Die Wärmepumpe 10 umfasst einen nicht näher gezeigten Kältekreislauf zum Erzeugen von Wärmeenergie, wobei der Kältekreislauf der Wärmepumpe 10 wenigstens einen Kompressor, einen Verflüssiger, ein Expansionsventil und einen Verdampfer aufweist. Die Wärmepumpe 10 ist über ein Wärmeübertragungs-Leitungsnetz 12, das eine Vielzahl von Fluidleitungen 14, 14' aufweist, mit wenigstens einer Wärmesenke 40, vorliegend dem Heizungssystem wärmeübertragend verbunden. Zudem sind an die Wärmepumpe 10 Soleleitungen 16, 16' angeschlossen, innerhalb derer ein Kältemittel, wie beispielsweise ein Glykol-Wasser-Gemisch, enthalten ist, das zum Erzeugen der Wärmeenergie mittels der Wärmepumpe 10 verwendet wird.

Die Wärmepumpe 10 umfasst eine Steuerung 20 zum Ansteuern des nicht näher gezeigten Kältekreislaufs der Wärmepumpe 10 und zum Ansteuern und/oder Abfragen verschiedener Sensoren 22, 22' sowie einer Umwälzpumpe 24 und einer Zusatzheizung 26. Einer der Sensoren ist als Außentemperatursensor 22 und mindestens ein weiterer Sensor ist als Temperatursensor 22' zum Erfassen der in Richtung der Wärmesenke 40 gelieferten Wärmeenergie oder der von der Wärmesenke 40 zur Wärmepumpe 10 zurückströmenden Wärmeenergie im Systemrücklauf 30 ausgebildet. Innerhalb des Wärmeübertragungs-Leitungsnetzes 12 ist zwischen der Wärmepumpe 10 und der Wärmesenke 40 ein Pufferspeicher 42 angeordnet.

Die Sensoren 22, 22' sowie die Umwälzpumpe 24 und die Zusatzheizung 26 sind signalleitend mit der Steuerung 20 gekoppelt. Die signalleitende Verbindung kann beispielsweise kabelgebunden, beispielsweise mittels fester Signalleitungen 28, 28' und/oder auch drahtlos über ein nicht näher gezeigtes Heimnetzwerk verwirklicht werden.

Um den Wärmeenergiebedarf der Wärmesenken 40 effizient zu decken, ist die Steuerung 20 der Wärmepumpe 10 dazu eingerichtet, den Wärmeenergiebedarf an der Wärmesenke 40 zu bestimmen und auf Basis dessen einen damit verknüpften durch die Wärmepumpe 10 zu erreichenden Temperatursollwert Ts zu ermitteln. Die Steuerung 20 ist ferner dazu eingerichtet, die Verfügbarkeit und/oder den Preis des für den Betrieb der Wärmepumpe 10 benötigten Stroms zu ermitteln. Das Ermitteln des Strompreises erfolgt insbesondere über einen vorbestimmten Zeitraum im Voraus, wobei die Steuerung durch Hinterlegen individuell einstellbarer Referenzwerte bestimmen kann, ob der Strompreis am Strommarkt vergleichsweise hoch oder vergleichsweise niedrig ist. Somit kann das Ansteuern der Wärmepumpe 10 zeitlich im Voraus geplant werden. Weiterhin ist die Steuerung 20 erfindungsgemäß dazu eingerichtet, den Temperatursollwert für die zu versorgende Wärmesenke 40 in Abhängigkeit von der Verfügbarkeit des Stroms bzw. dem Strompreis anzupassen, wobei das Anpassen des Temperatursollwertes Ts dahingehend beschränkt wird, dass das Zuschalten einer Zusatzheizung 26 zum Decken des Wärmeenergiebedarfs an der Wärmepumpe 10 vermieden wird. Um das Zuschalten der Zusatzheizung 26 gezielt zu vermeiden, wird das Anpassen des Temperatursollwertes Ts gestoppt oder dieser in die entgegensetzte Richtung zurückgestellt.

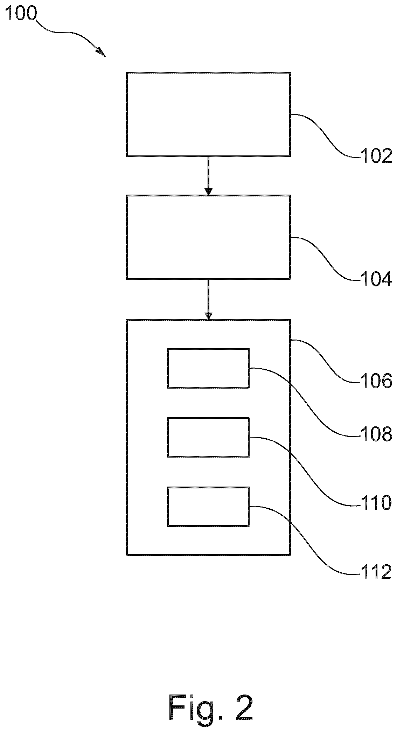

An der in Fig. 1 schematisch dargestellten Wärmepumpe 10 ist ein in Fig. 2 gezeigtes erfindungsgemäßes Verfahren zum Betreiben einer Wärmepumpe 10 zum Decken eines Wärmeenergiebedarfs an einer Wärmesenke 40 ausführbar. Das erfindungsgemäße Verfahren 100 umfasst dabei die wesentlichen Schritte: Bestimmen 102 des Wärmeenergiebedarfs an der Wärmesenke 40 und eines damit verknüpften, durch die Wärmepumpe 10 zu erreichenden Temperatursollwertes Ts mittels der Steuerung 20 in Abhängigkeit von vorherrschenden Umgebungsbedingungen, insbesondere einer aktuellen Außentemperatur; Ermitteln 104 einer Verfügbarkeit und/oder eines Preises des zum Betrieb der Wärmepumpe 10 benötigten Stroms durch die Steuerung 20; und Anpassen 106 des Temperatursollwertes Ts für die zu versorgende Wärmesenke 40 in Abhängigkeit von der Verfügbarkeit des Stroms und/oder dem Strompreis unter Berücksichtigung eines Vermeidens eines unnötigen Zuschaltens einer Zusatzheizung 26 an der Wärmepumpe 10.

Vorzugsweise ist mit dem Schritt des Anpassens 106 des Temperatursollwertes Ts eine Bedarfsbestimmung auf Basis des angepassten Temperatursollwertes Ts verknüpft, wobei auf Grundlage der Bedarfsbestimmung das Anpassen des Temperatursollwertes Ts zumindest gestoppt werden kann. In einer weiteren Ausführungsform beinhaltet das Anpassen 106 des Temperatursollwertes Ts insbesondere ein Erhöhen oder Verringern des Temperatursollwertes Ts, was, ausgehend von einem die Grundversorgung der Wärmesenke 40 mit Wärmeenergie definierenden, neutralen Temperatursensor T_{Sn}, stufenweise vorgenommen werden kann.

Zudem umfasst der Schritt des Anpassens 106 des Temperatursollwertes einen Unterschritt, betreffend ein zeitliches Verschieben 108 der Temperatursollwert-Anpassung für das Decken des Wärmeenergiebedarfs. Das Verschieben erfolgt insbesondere in Richtung eines Endabschnitts einer Zeitspanne mit einer hohen Verfügbarkeit an Strom und/oder einem relativ niedrigen Strompreis.

Vorzugsweise umfasst das Anpassen 106 des Temperatursollwertes Ts weiter optional den Unterschritt des Anpassens 110 des Temperatursollwertes Ts auf den neutralen Temperatursollwert T_{Sn} vor Erreichen eines Endes einer/der Zeitspanne mit der hohen Verfügbarkeit des Stroms und/oder dem relativ niedrigen Strompreis.

Der Schritt des Anpassens 106 des Temperatursollwertes Ts in Richtung des neutralen Temperatursollwertes T_{Sn} erfolgt insbesondere im Falle des Vorliegens eines Temperatursollwertes Ts, der für einen längeren Zeitraum unterhalb des neutralen Temperatursollwertes angepasst war, und einem weiteren Unterschritt, nämlich des Erfassens 112 einer Raumtemperatur mittels eines Raumsensors, wenn diese unterhalb einer Komforttemperatur liegt.

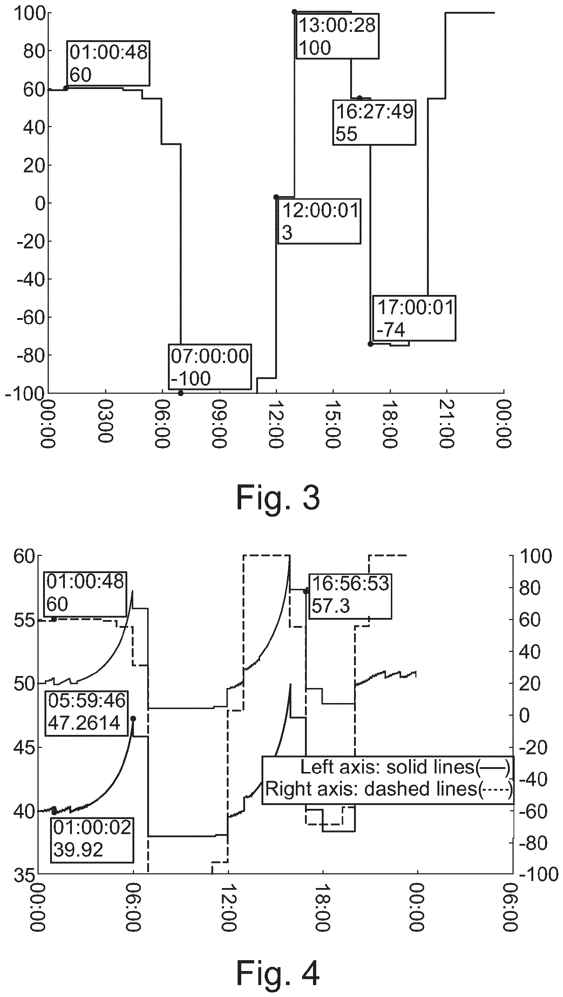

Fig. 3 zeigt ein Diagramm, das den Verlauf eines Preisindexes A wiedergibt. Der Preisindex A dient als Ausgangswert für das Anpassen des Temperatursollwertes beim Betreiben einer erfindungsgemäßen Wärmepumpe. Der Preisindex A basiert grundlegend auf der Verfügbarkeit bzw. dem Preis des Stroms, der für den Betrieb der Wärmepumpe 10 benötigt wird. Die Verfügbarkeit variiert üblicherweise in Abhängigkeit von einer jeweiligen Tageszeit zwischen 0 und 24 Uhr eines Tages. Der Preisindex A wird neben dem Strompreis auch durch an der Steuerung 20 der Wärmepumpe 10 von einem Anwender einstellbare Parameter definiert.

Einstellbare Parameter sind zum Beispiel eine durch die Wärmepumpe 10 erreichbare Effizienz oder ein durch die Wärmepumpe möglicher "Komfort" beim Erzeugen eines Wärmeenergiebedarfs. Je höher die Komforteinstellung desto größer ist der Abstand des Preisindexes A, speziell bei Hochpreisphasen des Stromes, zum tatsächlichen Strompreis. Bevorzugt ein Anwender vielmehr ein effizientes Betreiben der Wärmepumpe 10 entspricht der Preisindex A nahezu dem Strompreis. Vorliegend entspricht ein im Diagramm abgebildeter positiver Preisindex einem niedrigen Strompreis und ein negativer Preisindex entspricht einem hohen Strompreis.

Fig. 4 zeigt ein Diagramm, das den Verlauf von Start- und Stopp-Temperaturen bei der Brauchwassererzeugung mittels der Wärmepumpe in Abhängigkeit von dem sich verändern Preisindex (Kennlinie A) abbildet. Der sich über einen Tag verändernde Preisindex A hat Einfluss auf die Größe der Start- und Stopp-Temperaturen S1, S2. In Zeiträumen, beispielsweise in der Zeitspanne zwischen 20 Uhr und 7 Uhr sowie zwischen etwa 13 Uhr und 16 Uhr, in denen der Strom vergleichsweise günstig ist (positiver Preisindex A), werden durch die Steuerung 20 höhere Start- und Stopp-Temperaturen S1, S2 für die Brauchwasserversorgung an der Wärmepumpe 10 vorgegeben. In den verbleibenden Zeiträumen, in der Zeitspanne zwischen 7 Uhr und 12 Uhr und 16 Uhr bis 20 Uhr, in denen der Strom teuer ist (negativer Preisindex A) werden durch die Steuerung 20 niedrigere Start- und Stopp-Temperaturen S1, S2 für die Brauchwasserversorgung an der Wärmepumpe 10 vorgegeben.

Wie aus den Kennlinien S1 für die Start-Temperatur und S2 für die Stopp-Temperatur zu entnehmen ist, werden etwaige Anpassungen, ähnlich wie beim Temperatursollwert Ts für das Betreiben der Wärmepumpe, in Richtung eines Endabschnitts einer Zeitspanne mit einer hohen Verfügbarkeit an Strom und einem daraus resultierenden relativ niedrigen Strompreis verschoben. Die Start-Temperatur S1 verändert sich in einem Temperaturbereich von etwa 38°C bis etwa 50°C. Die Stopp-Temperatur S2 verändert sich in einem Temperaturbereich von etwa 48 bis etwa 60°C.

Kurz vor Ende der Zeitspanne mit einem relativ niedrigen Strompreis werden die höchsten Start- und Stopp-Temperaturen (Kennlinien S1, S2) erreicht. Das Erhöhen der Start- und Stopp-Temperaturen S1, S2 erfolgt allmählich, um ein unnötiges Zuschalten einer internen Zusatzheizung an der Wärmepumpe 10 oder einer nicht näher gezeigten externen Zusatzheizung für die Brauchwassererzeugung zu vermeiden. Wechselt hingegen der Preisindex A von einem positiven Wert auf einen negativen Wert, der Strompreis ist dann vergleichsweise teuer, werden die Start- und Stopp-Temperaturen S1, S2 sprunghaft angepasst, insbesondere verringert.

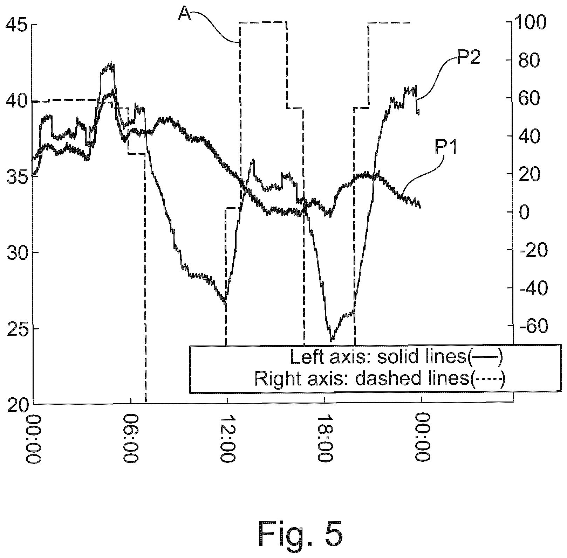

Fig. 5 zeigt ein Diagramm, das den Verlauf der Versorgungstemperatur P1, P2 der Wärmepumpe 10 in Abhängigkeit von dem Preisindex A und dem an der Wärmepumpe 10 einstellbaren Temperatursollwert Ts wiedergibt. Die im Diagramm gezeigte Kennlinie P1 gibt die mittels der Wärmepumpe 10 erzeugte Versorgungstemperatur an, die sich bei einem unbeeinflussten "neutralen" Temperatursollwert T_{Sn} und damit nahezu unberücksichtigt von dem sich über den Tag ändernden Preisindex A einstellt. Die in Fig. 5 gezeigte Kennlinie P2 gibt die von der Wärmepumpe 10 erzeugte Versorgungstemperatur an, welche sich vorliegend in Abhängigkeit von dem auf Basisi des sich über den Tag ändernden Preisindexes A angepassten Temperatursollwert Ts einstellt.

Durch den angepassten Temperatursollwert Ts, der den Preisindex A berücksichtigt, ist die Versorgungstemperatur P2 an der Wärmepumpe 10 gegenüber der Versorgungstemperatur P1 bei einem neutralen Temperatursollwert T_{Sn} in den Zeitspannen erhöht, in denen der Strompreis niedrig ist. Hingegen wird die Versorgungstemperatur P2 an der Wärmepumpe 10 in den Zeitspannen, in denen der Strompreis sehr hoch ist, gegenüber der Versorgungstemperatur P1 bei neutralen Temperatursollwert T_{Sn} deutlich verringert, wodurch ein deutlich effizienter Betrieb der Wärmepumpe 10 möglich wird.

### Bezugszeichenliste

- 10: Wärmepumpe
- 12: Wärmeübertragungs-Leitungsnetz
- 14, 14': Fluidleitung
- 16, 16`: Soleleitung
- 20: Steuerung
- 22: Außentemperatursensor
- 22`: Temperatursensor
- 24: Umwälzpumpe
- 26: Zusatzheizung
- 28, 28': Signalleitung
- 30: Systemrücklauf
- 40: Wärmesenke
- 42: Pufferspeicher
- 100: Verfahren
- 102: Bestimmen des Wärmeenergiebedarfs
- 104: Ermitteln einer Verfügbarkeit
- 106: Anpassen des Temperatursollwertes
- 108: Zeitliches Verschieben
- 110: Anpassen auf neutralen Temperatursollwert
- 112: Erfassen Raumtemperatur
- A: Preisindex
- S1: Start-Temperatur
- S2: Stopp-Temperatur
- P1: Versorgungstemperatur (Temperatursollwert angepasst)
- P2: Versorgungstemperatur (Temperatursollwert neutral)
- Ts: Temperatursollwert
- T_{Sn}: neutraler Temperatursollwert

## Patentansprüche

1. Verfahren (100) zum Betreiben einer Wärmepumpe (10) zum Decken eines Wärmeenergiebedarfs wenigstens einer mittels der Wärmepumpe (10) zu versorgenden Wärmesenke (40), insbesondere eines Heizungssystems (40) eines Gebäudes, wobei die Wärmepumpe (10) einen Kältekreislauf zum Erzeugen der Wärmeenergie und eine Steuerung (20) zum Ansteuern des Kältekreislaufs aufweist, umfassend die Schritte:
- Bestimmen (102) des Wärmeenergiebedarfs an der Wärmesenke (40) und eines damit verknüpften, durch die Wärmepumpe (10) zu erreichenden Temperatursollwertes (Ts) mittels der Steuerung (20) in Abhängigkeit von einer aktuellen Umgebungsbedingung;
- Ermitteln (104) einer Verfügbarkeit und/oder eines Preises des zum Betrieb der Wärmepumpe (10) benötigen Stroms durch die Steuerung (20), und
- Anpassen (106) des Temperatursollwertes (Ts) für die zu versorgende Wärmesenke in Abhängigkeit von der Verfügbarkeit des Stroms und/oder dem Strompreis und unter Berücksichtigung eines Vermeidens eines unnötigen Zuschaltens einer Zusatzheizung an der Wärmepumpe.

2. Verfahren (100) nach Anspruch 1,
wobei mit Anpassen (106) des Temperatursollwertes (Ts) eine Bedarfsbestimmung auf Basis des angepassten Temperatursollwertes (Ts) erfolgt und auf Grundlage der Bedarfsbestimmung das Anpassen des Temperatursollwertes (Ts) gestoppt werden kann.

3. Verfahren (100) nach Anspruch 1 oder 2,
wobei das Anpassen (106) des Temperatursollwertes (Ts), insbesondere ein Erhöhen oder Verringern des Temperatursollwertes (Ts), stufen- oder schrittweise und ausgehend von einem die Normalversorgung der Wärmesenke (40, 42) mit Wärmeenergie definierenden, neutralen Temperatursollwert (T_{Sn}) erfolgt.

4. Verfahren (100) nach einem der Ansprüche 1 bis 3,
wobei im Falle eines notwendigen Zuschaltens der Zusatzheizung (26) bei einem neutralen Temperatursollwert (T_{Sn}), eine von der Zusatzheizung (26) abgegebene Leistung in Abhängigkeit von der Verfügbarkeit des Stroms und/oder des Strompreises gesteuert wird.

5. Verfahren (100) nach einem der vorstehenden Ansprüche, umfassend den Schritt, zeitliches Verschieben (108) der Temperatursollwert-Anpassung für das Decken des Wärmeenergiebedarfs, insbesondere in Richtung eines Endabschnitts einer Zeitspanne mit einer hohen Verfügbarkeit an Strom und/oder einem relativ niedrigen Strompreis.

6. Verfahren nach Anspruch 5,
wobei das zeitliche Verschieben (108) der Temperatursollwert-Anpassung in Abhängigkeit von einer Abschätzung der thermischen Masse der mit Wärmeenergie zu versorgenden Wärmesenke (40) vorgenommen wird.

7. Verfahren (100) nach einem der vorstehenden Ansprüche, umfassend den Schritt, Anpassen (110) des Temperatursollwertes (Ts) auf den neutralen Temperatursollwert (T_{Sn}) vor Erreichen eines Endes einer/der Zeitspanne mit der hohen Verfügbarkeit des Stroms und/oder dem relativ niedrigen Strompreis.

8. Verfahren (100) nach einem der vorstehenden Ansprüche, umfassend den Schritt, Steuern der Wärmepumpenleistung, im Falle, dass die Wärmeenergie in einem Pufferspeicher (42) größer ist als die Wärmemenge, die an die Wärmesenke (40) abgegeben wird, und eine dem Pufferspeicher (42) nachgeschaltete Verteilereinheit zumindest teilweise geschlossen ist, unter Berücksichtigung des Umstands, dass die thermische Masse an der Wärmesenke (40) kleiner ist als im Vergleich zu einer normalen Absenkung bei geöffneter Verteilereinheit.

9. Verfahren (100) nach einem der vorstehenden Ansprüche,
wobei mit Auftreten eines Temperaturabfalls an der Wärmesenke (40) nach dem Abschalten des Kältekreislaufs eine Geschwindigkeit für den Temperaturabfall gemessen wird.

10. Verfahren (100) nach einem der vorstehenden Ansprüche,
wobei mit Auftreten eines Temperaturabfalls im Gebäude nach dem Abschalten des Kältekreislaufs durch das Erfassen der Temperatur an einem Raumsensor eine Geschwindigkeit für den Temperaturabfall gemessen wird.

11. Verfahren (100) nach einem der vorstehenden Ansprüche, umfassend den Schritt, Anpassen (106) des Temperatursollwertes (Ts) in Richtung des neutralen Temperatursollwertes (T_{Sn}), im Falle des Vorliegens eines Temperatursollwertes (Ts), der für einen längeren Zeitraum unterhalb des neutralen Temperatursollwertes (T_{Sn}) angepasst war, und des Erfassens (112) einer Temperatur mittels eines Raumsensors, wenn diese unterhalb einer Komforttemperatur liegt.

12. Wärmepumpe (10), mit wenigstens
- einem Kältekreislauf, wobei der Kältekreislauf zumindest einen Kompressor, einen Verflüssiger, ein Expansionsventil und einen Verdampfer aufweist, und
- einer Steuerung (20), welche zumindest zum Ansteuern des Kältekreislaufs eingerichtet ist,
**dadurch gekennzeichnet, dass** die Steuerung (20) zum Ausführen eines Verfahrens (100) zum Betreiben einer Wärmepumpe (10) zum Decken des Wärmeenergiebedarfs einer Wärmesenke (40, 42) gemäß einem der Merkmale der Ansprüche 1 bis 11 eingerichtet ist.
